# EUROPEAN PATENT SPECIFICATION

(11) **EP 3 511 900 B1**
(45) Date of publication and mention of the grant of the patent: **05.05.2021**
(21) Application number: 17848440.8
(22) Date of filing: 26.07.2017
(51) Int. Cl.: G06T 7/90, G06T 7/73, B60Q 1/14, G06K 9/00, H04N 5/235

(54) **IMAGE PROCESSING DEVICE AND LIGHT DISTRIBUTION CONTROL SYSTEM**
BILDVERARBEITUNGSVORRICHTUNG UND LICHTVERTEILUNGSSTEUERUNGSSYSTEM
DISPOSITIF DE TRAITEMENT D'IMAGE ET SYSTÈME DE COMMANDE DE DISTRIBUTION DE LUMIÈRE

(30) Priority: 06.09.2016 JP 2016173596
(43) Date of publication of application: 17.07.2019
(73) Proprietor: Hitachi Automotive Systems, Ltd., Hitachinaka-shi Ibaraki 312-8503 (JP)
(72) Inventor: DOI Koji, Hitachinaka-shi Ibaraki 312-8503 (JP); NAGASAKI Takeshi, Hitachinaka-shi Ibaraki 312-8503 (JP)
(74) Representative: MERH-IP Matias Erny Reichl Hoffmann Patentanwälte PartG mbB
(86) International application number: PCT/JP2017/026976
(87) International publication number: WO 2018/047495

(56) References cited:
- WO-A1-2015/114654
- JP-A- 2004 220 261
- JP-A- 2005 092 861
- JP-A- 2014 232 431
- US-A1- 2008 084 165
- US-A1- 2014 293 055

## Description

### Technical Field

The present invention relates to an image processing device for being mounted on a vehicle and a light distribution control system that controls light distribution of a headlight of a vehicle.

### Background Art

Conventionally, an invention relating to an image processing system for being mounted on a vehicle has been known (see PTL 1 below). The image processing system described in PTL 1 is provided with an imaging means mounted on a vehicle and an image analysis means that acquires an image captured by the imaging means and analyzes the image. This image analysis means acquires a plurality of images with different light exposure amounts captured by the imaging means and analyzes the plurality of images with different light exposure amounts to locate the position of another vehicle (see PTL 1, claim 1 and the like) .

In this image processing system, by capturing a plurality of images while varying the light exposure amount, it is possible to precisely detect light even with an imaging element having a small dynamic range and to construct a low-cost image processing system. Additionally, in this image processing system, it is possible to further reduce the influence of noise light, which is useful for improving an application that requires locating a vehicle at night by a camera (see PTL 1, paragraph 0009 and the like).
WO 2015/114654 A1 describes a vehicle detection system and method for detecting one or more vehicles in a dynamic varying region of interest and more particularly relates to vehicle detection system in low light conditions, such as night time.
US 2008/084165 A1 provides a headlight control apparatus which suppresses a feeling of strangeness given to a driver of an own vehicle by hunting due to reflector light while preventing a preceding vehicle and an on-coming vehicle from being dazzled, based on a video image obtained by a camera.
US 2014/293055 A1 extracts only the headlights of an oncoming vehicle or the taillights of a preceding vehicle from various light spots at night for the purpose of offering the driver a safer field of view based on information from a stereo camera.

### Citation List

### Patent Literature

PTL 1: JP 2005-092857 A

### Summary of Invention

### Technical Problem

In the conventional image processing system mentioned above, since the process of scanning a wide range of an image is performed for each of a plurality of images with different light exposure amounts, the processing amount increases and, for example, hardware processing by a dedicated logic circuit becomes necessary, which is a problem for lowering cost.

The present invention has been made in view of the above problems and an object of the present invention is to provide a low-cost image processing device that is capable of reducing a processing amount for detecting light spots in comparison to the prior art, and is capable of detecting headlights and tail lamps of vehicles with high precision; and a light distribution control system including this image processing device.

### Solution to Problem

In order to attain the above object, an image processing device according to claim 1 is provided. Dependent claims relate to preferred embodiments of the present invention.

### Advantageous Effects of Invention

In the image processing device of the present invention, a light spot is detected from the first image by the light spot detection unit and only the light spot region in the second image corresponding to the detected light spot is limitedly scanned when the second image is processed by the specific color detection unit, such that the light spot of the specific color can be detected. Therefore, according to the present invention, it is possible to provide a low-cost image processing device that reduces the processing amount for detecting a light spot of a specific color in comparison to the prior art to omit a dedicated circuit or the like, and also is capable of detecting headlights and tail lamps of vehicles with high precision; and a light distribution control system including this image processing device.

### Brief Description of Drawings

[FIG. 1] FIG. 1 is a schematic diagram of an image processing device and a light distribution control system according to an embodiment of the present invention.
[FIG. 2A] FIG. 2A is a diagram illustrating an example of an image acquired by the image processing device illustrated in FIG. 1.
[FIG. 2B] FIG. 2B is a diagram illustrating an example of a first image corresponding to FIG. 2A.
[FIG. 2C] FIG. 2C is a diagram illustrating an example of a second image corresponding to FIG. 2A.
[FIG. 3A] FIG. 3A is a diagram illustrating an example of an image acquired by the image processing device illustrated in FIG. 1.
[FIG. 3B] FIG. 3B is a diagram illustrating an example of a first image corresponding to FIG. 3A.
[FIG. 3C] FIG. 3C is a diagram illustrating an example of a second image corresponding to FIG. 3A.
[FIG. 4] FIG. 4 is a flowchart illustrating an example of an image processing flow of the image processing device illustrated in FIG. 1.

### Description of Embodiments

Hereinafter, embodiments of an image processing device and a light distribution control system of the present invention will be described with reference to the drawings.

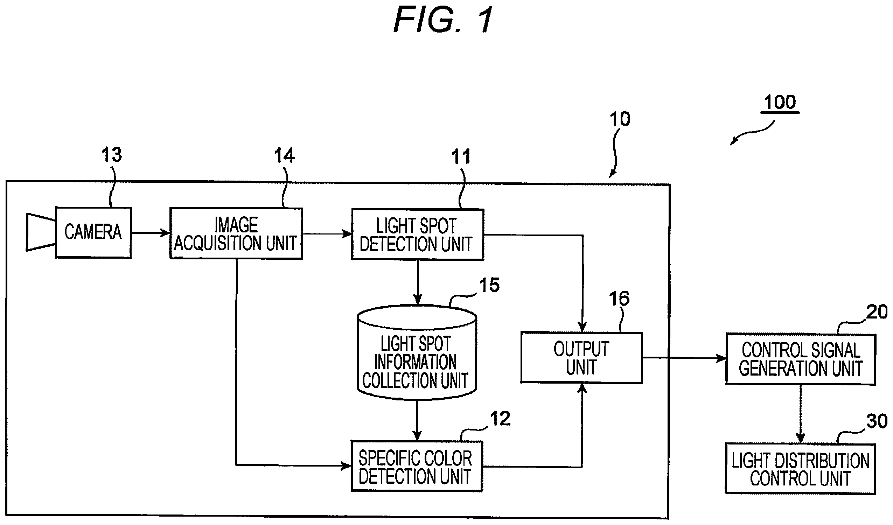

FIG. 1 is a block diagram illustrating a schematic configuration of the image processing device 10 and the light distribution control system 100 according to one embodiment of the present invention. The light distribution control system 100 of the present embodiment is, for example, an in-vehicle system mounted on a vehicle such as an automobile and is a system that detects a headlight of an oncoming vehicle and a tail lamp of a preceding vehicle to control light distribution of a headlight of a host vehicle. The light distribution control system 100 is provided with, for example, the image processing device 10, a control signal generation unit 20, and a light distribution control unit 30.

The image processing device 10 is provided with a light spot detection unit 11 and a specific color detection unit 12 as main components. The image processing device 10 also can be provided with, for example, an imaging unit 13, an image acquisition unit 14, a light spot information collection unit 15, and an output unit 16.

For example, the imaging unit 13 can be constituted by an imaging device such as a monocular camera or a stereo camera which is installed in a vehicle and is directed to the outside of the vehicle such as the front of the vehicle. In addition to a normal image, for example, the imaging unit 13 can alternately capture a first image and a second image at a predetermined imaging cycle. When the imaging unit 13 is a stereo camera, a pair of images can be simultaneously captured at different positions at a base line length interval.

The light exposure amount of the first image captured by the imaging unit 13 is lower than the light exposure amount of the second image. The first image is set to a light exposure amount suitable for detection of, for example, a headlight having a relatively high luminance or a tail lamp of a preceding vehicle at a short distance. Meanwhile, the light exposure amount of the second image is higher than the light exposure amount of the first image. The second image is set to a light exposure amount suitable for detection of, for example, a tail lamp of a preceding vehicle at a long distance having a relatively low luminance.

Note that, since the brightness of the tail lamp is stipulated by laws and regulations, by adjusting a first light exposure amount at the time of capturing the first image by the imaging unit 13, the range of distance within which the tail lamp of the preceding vehicle appears in the first image can be adjusted. In the following description, a region on an image where the tail lamp of the preceding vehicle appears in the first image having a lower light exposure amount, of which the distance from the host vehicle is within a predetermined distance range, is called a "neighboring region". Meanwhile, a region on an image where the tail lamp of the preceding vehicle no longer appear in the first image having a lower light exposure amount, of which the distance from the host vehicle is out of the predetermined distance range, is called a "distant region".

The light exposure amounts of the first image and the second image can be controlled, for example, by increasing or decreasing the light exposure time at the time of capturing the image by the imaging unit 13. That is, by setting the light exposure time at the time of capturing the second image by the imaging unit 13 longer than the light exposure time at the time of capturing the first image by the imaging unit 13, the light exposure amount of the second image can be made higher than the light exposure amount of the first image. Note that the light exposure amounts of the first image and the second image also can be adjusted by adapting an analog gain that amplifies an analog signal value in a circuit of the imaging unit 13, or adapting a digital gain that amplifies a digital signal value in an image process after capturing, or adapting the diaphragm of the camera.

The imaging unit 13 has an image sensor such as a complementary metal oxide semiconductor (CMOS) or a charge coupled device (CCD). The image sensor has a plurality of imaging modules and each imaging module has a plurality of light receiving elements that detect light of a plurality of colors including a specific color. As a specific color to be detected by the light receiving element, for example, red (R) suitable for detection of the tail lamp can be selected.

In addition, when the specific color to be detected by the light receiving element is red (R), for example, a combination of the three primary colors of light such as green (G) and blue (B) can be selected as a plurality of colors other than red (R) to be detected by other light receiving elements. For each imaging module, for example, a Bayer arrangement can be adopted as an arrangement of the plurality of light receiving elements that detect respective different colors.

For example, the image acquisition unit 14 controls the imaging unit 13 at the time of capturing an image and cyclically increases or decreases the light exposure amount at the time of image capturing by the imaging unit 13. The image acquisition unit 14 can cyclically increase or decrease the light exposure amount at the time of image capturing, for example, by cyclically switching the light exposure time at the time of image capturing by the imaging unit 13 between short-time light exposure and long-time light exposure. The image acquisition unit 14 controls the imaging unit 13 to periodically capture, for example, the front of the vehicle and periodically acquires the first image and the second image having a higher light exposure amount than that of the first image, besides the normal image.

Note that, when the imaging unit 13 is a stereo camera, it is possible for the image acquisition unit 14 to have a function as a distance information acquisition unit that acquires distance information on the basis of a plurality of images captured simultaneously at different positions separated by a base line length interval. Specifically, the image acquisition unit 14 as the distance information acquisition unit acquires the distance information on each pixel of the image on the basis of the parallax between the pair of images from the stereo camera. Note that the image acquisition unit 14 and the distance information acquisition unit may be separately prepared.

The light spot detection unit 11 detects a light spot from the first image captured by the imaging unit 13 and acquired by the image acquisition unit 14. Specifically, the light spot detection unit 11 detects the light spot from the first image on the basis of the luminance worked out from the signal intensity of the imaging module of the image sensor constituting the imaging unit 13. In more detail, the signal intensity of each imaging module is worked out by weighting and summing the signal intensities of a plurality of light receiving elements that detect different colors in each imaging module, according to the ratio of the light receiving elements of respective colors. Then, a pixel of the first image in which the luminance worked out from the signal intensity of each imaging module exceeds a predetermined luminance threshold value is detected as a light spot.

The process of detecting the light spot from the first image by the light spot detection unit 11 can be performed by software processing using a general-purpose arithmetic processing unit but the processing amount is relatively large; accordingly, the process also can be performed by hardware processing using a dedicated logic circuit.

In the example illustrated in FIG. 1, the light spot detection unit 11 has a function as a light spot region setting unit that sets a light spot region in the second image in correspondence to the light spot detected from the first image. That is, on the basis of information on the pixel detected as the light spot in the first image, the light spot detection unit 11 as the light spot region setting unit sets, in the second image, a light spot region including a pixel corresponding to the detected pixel. Note that the light spot detection unit 11 and the light spot region setting unit may be separately prepared.

The light spot region set in the second image can be assigned as, for example, a rectangular region surrounding the pixel group of the second image corresponding to the pixel group detected as the light spot in the first image. In addition, from the viewpoint of lowering the processing amount of the specific color detection unit 12, it is preferable that the area of the light spot region be as small as possible within a range including the pixel group corresponding to the detected light spot.

The light spot information collection unit 15 is constituted by, for example, a storage device such as a memory and a hard disk and collects information on the light spot detected by the light spot detection unit 11 to save therein. Table 1 below indicates an example of the structure and data of the light spot information. As indicated in Table 1, when the light spot region has, for example, a rectangular shape, the light spot information collected and saved in the light spot information collection unit 15 can contain a light spot ID, coordinates of a pixel at the upper left of the light spot region, the size of the light spot region, luminance, and the like.

**[Table 1]**

| Light Spot ID | Coordinates of Upper Left Point of Light Spot Region | Size of Light Spot Region | Luminance |
|---|---|---|---|
| 1 | (10, 20) | (20, 20) | 100 |
| 2 | (40, 20) | (20, 20) | 150 |
| 3 | (50, 100) | (10, 10) | 200 |

Note that, when discrimination between the headlight and the tail lamp is performed for each light spot detected by the light spot detection unit 11, the light spot information collection unit 15 may collect information on each light spot in association with a result of discrimination between the headlight and the tail lamp to save therein.

In the second image having a higher light exposure amount than that of the first image, which has been captured by the imaging unit 13 and acquired by the image acquisition unit 14, the specific color detection unit 12 detects a specific color in the light spot region corresponding to the light spot detected from the first image. Specifically, a light spot region including the pixel group of the second image corresponding to the pixel group detected as the light spot in the first image is set in the second image.

The specific color detection unit 12 detects, for example, red color as a specific color in this light spot region in the second image. Note that, since the light exposure amount of the first image is low, it is difficult for the specific color detection unit 12 to detect a color from the first image. In contrast to this, since the light exposure amount of the second image is higher than that of the first image, it is possible for the specific color detection unit 12 to detect the specific color.

The specific color detection unit 12 detects, for example, red color as a specific color on the basis of the signal intensity of the light receiving element in the imaging module of the imaging unit 13 corresponding to the light spot region in the second image, which detects light of the specific color. Consequently, when the red tail lamp of the preceding vehicle present in the neighboring region of the host vehicle is included within a high luminance light spot appearing in the first image, it is possible to detect the presence of the red tail lamp in the light spot region in the second image corresponding to the light spot in the first image.

Furthermore, when a specific color, for example, red color is not detected in the light spot region in the second image set by the light spot detection unit 11 as the light spot region setting unit, the specific color detection unit 12 can set the distant region in the second image. The distant region can be set for a limited region on the road more distant from the neighboring region in the second image. Likewise, the specific color detection unit 12 also can set the distant region in the second image when the light spot is not detected from the first image by the light spot detection unit 11.

In addition, when the imaging unit 13 is a stereo camera, by utilizing the distance information worked out from the parallax between the pair of second images from the stereo camera, the image acquisition unit 14 can set a range in which the tail lamp of the preceding vehicle does not appear in the first image, as the distant region in the second image. Note that, even when the imaging unit 13 is a monocular camera, the image acquisition unit 14 also can set the distant region in the second image, for example, by specifying the range of the neighboring region on the image from the history of the first image and specifying a region on the road outside this neighboring region as the distant region on the image.

When the light spot is not detected by the light spot detection unit 11 or when the specific color is not detected from the light spot region in the second image, the specific color detection unit 12 detects a light spot of the specific color from a distant region set in the second image. As a consequence, it is possible to detect the tail lamp of the preceding vehicle present in the distant region, which does not appear in the first image but appear in the second image.

When the distant region is set in the second image, it is preferable that no gap exist between the distant region and the neighboring region. If there is a gap between the neighboring region and the distant region in the second image and the preceding vehicle is present at an intermediate distance corresponding to this gap, the tail lamp of this preceding vehicle does not appear in the first image and is not detected by the light spot detection unit 11. In this case, the specific color detection unit 12 will detect a specific color from the distant region in the second image.

However, the tail lamp of the preceding vehicle present at the intermediate distance corresponding to the distance between the neighboring region and the distant region appears in the second image as a light spot between the neighboring region and the distant region. This light spot cannot be detected by the specific color detection unit 12 that detects a specific color only from the light spot region and the distant region in the second image. In order to prevent such a detection error for the tail lamp of the preceding vehicle, the distant region in the second image may be set, for example, to overlap the neighboring region such that no gap exists between the distant region and the neighboring region.

The output unit 16 integrates the detection result for the light spot by the light spot detection unit 11 and the detection result for the specific color by the specific color detection unit 12 and outputs the integrated result to the control signal generation unit 20 of the light distribution control system 100.

On the basis of the detection results of the light spot detection unit 11 and the specific color detection unit 12 of the image processing device 10 output from the output unit 16, the control signal generation unit 20 generates a light distribution control signal for controlling light distribution of the headlight of the vehicle.

The light distribution control unit 30 controls light distribution of the headlight of the vehicle on the basis of the control signal generated by the control signal generation unit 20. Specifically, the light distribution control unit 30 can control light distribution of the headlight between a high beam and a low beam on the basis of the light distribution control signal. Note that the light distribution control by the light distribution control system 100 is not limited to switching between the high beam and the low beam of the headlight and it is possible to include control, for example, for turning on/off, the irradiation direction, and the light quantity of the headlight, a position lamp, a fog lamp, and the like.

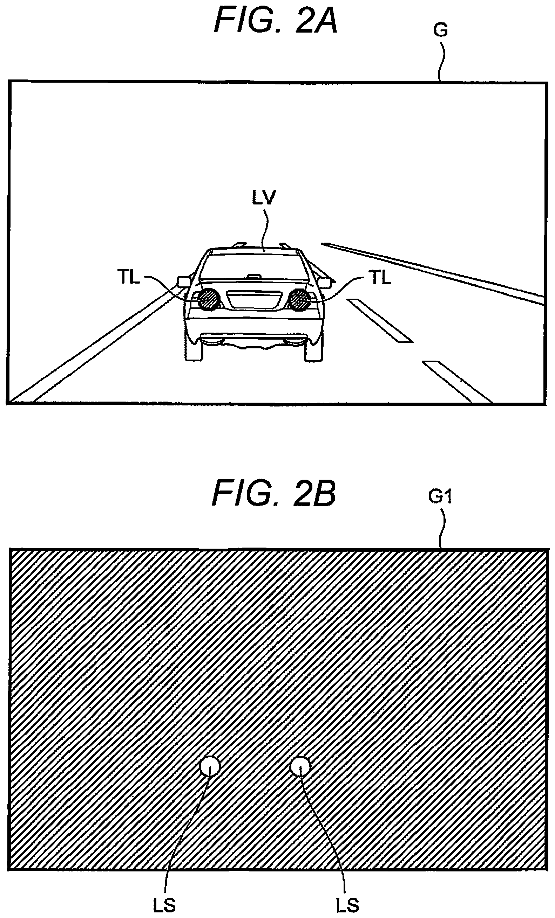

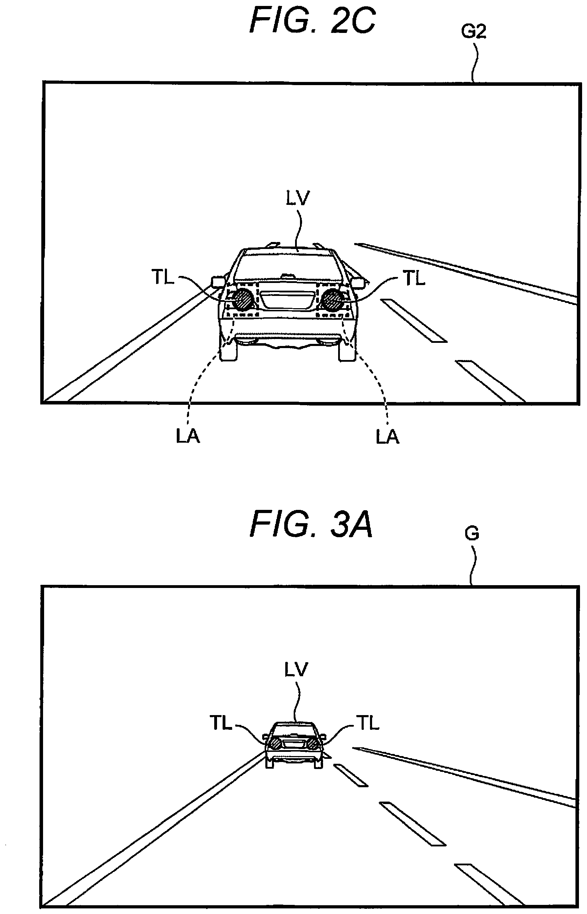

FIGS. 2A and 3A are diagrams illustrating examples of an image G acquired on the basis of a normal schedule of the image processing device 10 of the present embodiment. Normally, the image processing device 10 acquires images captured cyclically by the imaging unit 13 on the basis of a preset schedule. FIG. 2A illustrates an example in which a preceding vehicle LV is present in the neighboring region at short distance from the host vehicle. FIG. 3A illustrates an example in which the preceding vehicle LV is present in the distant region at long distance from the host vehicle.

The image processing device 10 can reset the schedule at a predetermined timing.

Specifically, for example, when an application is activated or stopped in the vehicle, when there is a change in the state of the host vehicle or the surroundings, or when a predetermined time has passed, the image processing device 10 can reset the schedule. The image processing device 10 executes the following processes in accordance with the set schedule.

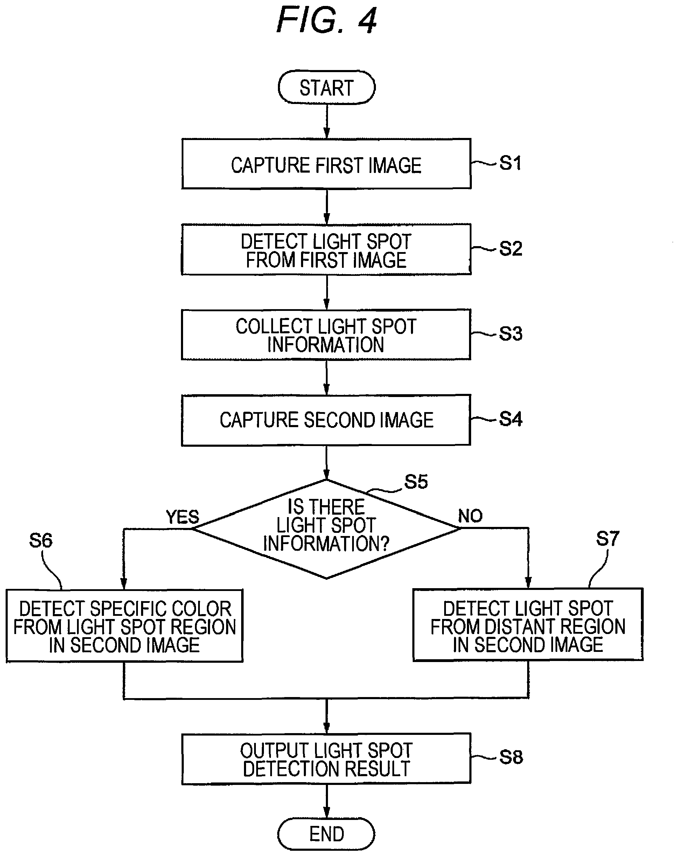

FIG. 4 is a flowchart illustrating an example of an image processing flow of the image processing device 10 illustrated in FIG. 1.

First, in step S1, the image processing device 10 sets the light exposure time of an image to be captured next by the imaging unit 13 to a predetermined short light exposure time using the image acquisition unit 14, and controls the imaging unit 13 using the image acquisition unit 14 to capture the first image at a predetermined timing; thus acquires the first image.

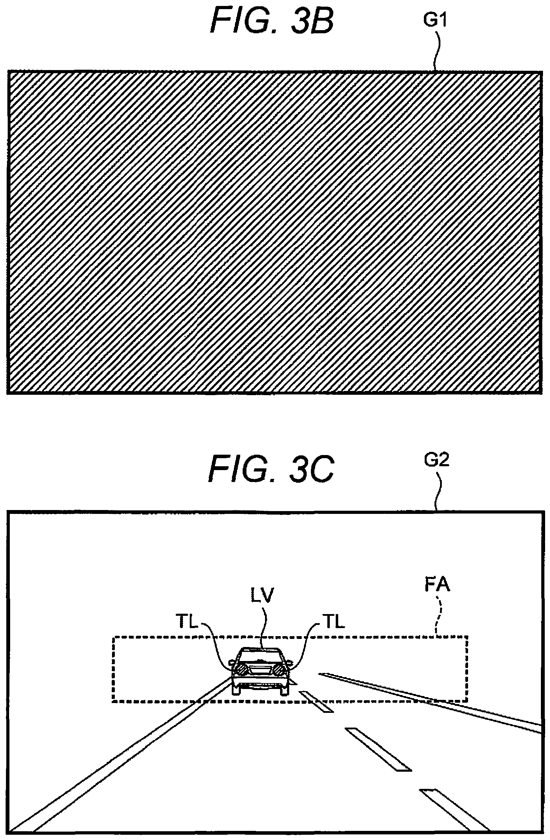

FIGS. 2B and 3B are diagrams illustrating examples of a first image G1 corresponding to FIGS. 2A and 3A, respectively. As illustrated in FIG. 2A, when the preceding vehicle LV is present in the neighboring region where the distance from the host vehicle is within a predetermined distance range, since the luminance of a tail lamp TL of the preceding vehicle LV seen from the host vehicle is high, the tail lamp TL of the preceding vehicle LV appears in the first image G1 having a lower light exposure amount, as illustrated in FIG. 2B.

On the other hand, as illustrated in FIG. 3A, when the preceding vehicle LV is not present in the neighboring region but present in the distant region where the distance from the host vehicle is out of the predetermined distance range, since the luminance of the tail lamp TL of the preceding vehicle LV seen from the host vehicle declines, the tail lamp TL of the preceding vehicle LV does not appear in the first image G1 having a lower light exposure amount, as illustrated in FIG. 3B.

Next, in step S2, the image processing device 10 detects a light spot from the first image G1 using the light spot detection unit 11. Specifically, each pixel of the first image G1 is scanned to detect a region of adjacent pixels whose luminance values are equal to or greater than a threshold value. In the example illustrated in FIG. 2B, two circular light spots LS having a predetermined area are detected from the first image G1, while the light spot LS is not detected from the first image G1 in the example illustrated in FIG. 3B.

Next, in step S3, the image processing device 10 collects the light spot information detected in step S2 to save in the light spot information collection unit 15. Next, in step S4, the image processing device 10 sets the light exposure time of an image to be captured next by the imaging unit 13 to a predetermined long light exposure time using the image acquisition unit 14, and controls the imaging unit 13 using the image acquisition unit 14 to capture the second image at a predetermined timing; thus acquires the second image.

FIGS. 2C and 3C are diagrams illustrating examples of a second image G2 corresponding to FIGS. 2A and 3A. Since the second image G2 has a higher light exposure amount than that of the first image G1 illustrated in FIGS. 2B and 3B, not only the tail lamp TL of the preceding vehicle LV present in the neighboring region illustrated in FIG. 2C, but also the tail lamp TL of the preceding vehicle LV present in a distant region FA illustrated in FIG. 3C is also allowed to appear in the second image G2.

Next, in step S5, the image processing device 10 determines whether or not there is the light spot information in step S3. When the light spot information has been obtained (YES), the process proceeds to step S6 and, when the light spot information has not been obtained (NO), the process proceeds to step S7.

In step S6, the image processing device 10 detects a light spot of a specific color, for example, of red color using the specific color detection unit 12, from the second image G2 with the long light exposure time illustrated in FIG. 2C, which has been acquired in step S4. Specifically, as illustrated in FIG. 2C, color information on pixels included in light spot regions LA set in the second image G2 in correspondence to the light spot information on the first image G1 collected in the light spot information collection unit 15 is referred to by the specific color detection unit 12, and it is determined whether or not the color information represents red color defined as the tail lamp TL.

When it is determined by the specific color detection unit 12 that the color information represents red color, the image processing device 10 regards the relevant light spot as the tail lamp TL. Upon completion of the determination process for all the light spot regions LA set in the second image G2, the specific color detection unit 12 transfers the detection result for the tail lamp TL to the output unit 16.

In step S7, the image processing device 10 detects a light spot of a specific color, for example, of red color using the specific color detection unit 12, in the distant region FA set in the second image G2 with the long light exposure time illustrated in FIG. 3C, which has been acquired in step S4. Specifically, the specific color detection unit 12 scans each pixel of the distant region FA in the second image G2 to detect a region of adjacent pixels whose luminance values are equal to or greater than a threshold value.

Furthermore, the specific color detection unit 12 refers to the color information on this pixel region and determines whether or not the color information represents red color defined as the tail lamp TL. When it is determined by the specific color detection unit 12 that the color information represents red color, the image processing device 10 regards the light spot in this pixel region as the tail lamp TL. Upon completion of the determination process for all the pixels in the distant region FA, the specific color detection unit 12 transfers the detection result for the tail lamp TL to the output unit 16. With the processes thus far, one cycle of the image processing flow of the image processing device 10 is finished.

Hereinafter, actions of the image processing device 10 and the light distribution control system 100 of the present embodiment will be described.

As described earlier, the image processing device 10 according to the present embodiment is provided with: the light spot detection unit 11 that detects the light spot LS from the first image G1; and the specific color detection unit 12 that detects a specific color in the light spot region LA corresponding to a light spot in the second image G2 having a higher light exposure amount than the first image G1.

Accordingly, the light spot LS is detected from the first image G1 by the light spot detection unit 11 and only the light spot region LA of the second image G2 corresponding to the detected light spot LS is limitedly scanned when the second image G2 is processed by the specific color detection unit 12, such that the light spot LS of a specific color can be detected. Therefore, according to the image processing device 10 of the present embodiment, it is possible to provide a low-cost device that enables software processing by a general-purpose arithmetic processing device to omit a dedicated circuit or the like by reducing the processing amount for detecting the light spot LS of a specific color in comparison to the prior art, and is capable of detecting the headlights and the tail lamps TL of vehicles with high precision.

Furthermore, the image processing device 10 of the present embodiment is provided with the light spot detection unit 11 as the light spot region setting unit that sets the light spot region LA in the second image G2 in correspondence to the light spot LS detected from the first image G1. With this configuration, on the basis of the position of the headlight of the oncoming vehicle having a relatively high luminance and the tail lamp TL of the preceding vehicle LV present in the neighboring region, which appear as the light spot LS in the first image G1 having a lower light exposure amount, it is possible to set the light spot region LA in the second image G2.

Accordingly, the processing range of the second image G2 by the specific color detection unit 12 that performs the process of detecting a specific color with a relatively high processing load can be narrowed down to a very limited range including pixels corresponding to the light spot LS detected from the first image G1. Therefore, compared to a case where a specific color is detected from the entire second image G2 or a wider range thereof, the processing amount is significantly reduced, while it is possible to identify the tail lamp TL of the preceding vehicle LV and the headlight of the oncoming vehicle present in the neighboring region of the host vehicle with high precision.

In addition, the image processing device 10 of the present embodiment is provided with the imaging unit 13 that captures the first image G1 and the second image G2. Then, the imaging unit 13 has a plurality of imaging modules and each imaging module has a plurality of light receiving elements that detect light of a plurality of colors including a specific color such as red color. With this configuration, it is possible not only to capture a color image by the imaging unit 13 but also to identify the headlight of white color and the tail lamp TL of a specific color.

Additionally, in the image processing device 10 of the present embodiment, the light spot detection unit 11 detects the light spot on the basis of the luminance worked out from the signal intensity of the imaging module. This makes it possible to detect a pixel having a luminance exceeding a predetermined luminance threshold value from the first image G1 as the light spot.

Furthermore, in the image processing device 10 of the present embodiment, the specific color detection unit 12 detects the specific color on the basis of the signal intensity of the light receiving element of the imaging module corresponding to the light spot region LA, which detects light of the specific color. This makes it possible to detect the specific color in the light spot region LA in the second image G2 corresponding to the light spot LS detected from the first image G1.

When the imaging unit 13 is a stereo camera, the image processing device 10 of the present embodiment also can be provided with the image acquisition unit 14 as the distance information acquisition unit that acquires the distance information on the basis of a plurality of the images G captured by the imaging unit 13. The specific color detection unit 12 also can detect the light spot of the specific color from the distant region set on the basis of this distance information acquired by the image acquisition unit 14 as the distance information acquisition unit. Consequently, on the basis of the distance information based on the plurality of images G, the processing range of the second image G2 is narrowed down to the limited distant region FA and the processing amount of the specific color detection unit 12 is significantly reduced in comparison to the prior art, while it is possible to detect the tail lamp TL of the preceding vehicle LV in the distant region FA, which does not appear in the first image G1.

Furthermore, in the image processing device 10 of the present embodiment, when the light spot LS is not detected by the light spot detection unit 11, the specific color detection unit 12 can detect the light spot of the specific color from the distant region FA set in the second image G2. In this case as well, the processing range of the second image G2 is narrowed down to the limited distant region FA and the processing amount of the specific color detection unit 12 is significantly reduced in comparison to the prior art, while it is possible to detect the tail lamp TL of the preceding vehicle LV in the distant region FA, which does not appear in the first image G1.

Meanwhile, the light distribution control system 100 of the present embodiment is a system that controls light distribution of the headlight of the vehicle and is provided with the above-described image processing device 10 and the control signal generation unit 20 that generates the light distribution control signal for the headlight on the basis of detection results of the light spot detection unit 11 and the specific color detection unit 12.

With this configuration, it is possible to provide the light distribution control system 100 including the low-cost image processing device 10 that reduces the processing amount for detecting the light spot LS in comparison to the prior art to omit a dedicated circuit or the like, and also is capable of detecting the headlights and the tail lamps TL of vehicles with high precision. In addition, since the headlight of the oncoming vehicle and the tail lamp TL of the preceding vehicle LV can be detected with high precision, it is possible to generate an appropriate control signal and to control light distribution of the headlight so as not to hinder the driving of the oncoming vehicle or the preceding vehicle LV.

Furthermore, the light distribution control system 100 of the present embodiment is provided with the light distribution control unit 30 that controls light distribution of the headlight between the high beam and the low beam on the basis of the light distribution control signal generated by the control signal generation unit 20. Accordingly, for example, when the headlight of the oncoming vehicle or the tail lamp TL of the preceding vehicle LV is detected by the image processing device 10, the headlight of the host vehicle can be switched to the low beam by the light distribution control unit 30. In addition, for example, when the headlight of the oncoming vehicle or the tail lamp TL of the preceding vehicle LV is not detected by the image processing device 10, the headlight of the host vehicle can be switched to the high beam by the light distribution control unit 30.

While the embodiments of the present invention have been described in detail with reference to the drawings, the scope of the invention is defined by the appended claims.

### Reference Signs List

10 image processing device
11 light spot detection unit (light spot region setting unit)
12 specific color detection unit
13 imaging unit
14 image acquisition unit (distance information acquisition unit)
20 control signal generation unit
30 light distribution control unit
100 light distribution control system
FA distant region
G image
G1 first image
G2 second image
LA light spot region
LS light spot

## Claims

1. An image processing device for controlling light distribution of a headlight of a vehicle comprising:
a light spot detection unit (11) configured to detect a light spot (LS) from a first image (G1), wherein each light spot (LS) is a tail lamp or head light of another vehicle: and
a specific color detection unit (12) configured to:
scan, for each light spot (LS) detected by said light spot detection unit (11), only a light spot region (LA) in a second image (G2), wherein said second image (G2) has a higher light exposure amount than the first image (G1), and wherein said light spot region (LA) is set in the second image (G2) such as to correspond to the light spot (LS) detected in the first image (G1), and
to detect a specific color in the light spot region (LA), in the second image (G2), corresponding to the light spot (LS) from the first image (G1),
wherein the higher light exposure amount of the second image (G2) is set such that the specific color can be detected in the light spot region (LA) in the second image (G2).

2. The image processing device according to claim 1, further comprising:
an imaging unit (13) that captures the first image (G1) and the second image (G2),
wherein the imaging unit (13) includes a plurality of imaging modules, and each imaging module includes a plurality of light receiving elements that detect light of a plurality of colors including the specific color.

3. The image processing device according to claim 2, wherein the light spot detection unit (11) detects the light spot (LS) on the basis of luminance worked out from signal intensity of the imaging module.

4. The image processing device according to claim 2, wherein the specific color detection unit (12) detects the specific color on the basis of signal intensity of the light receiving element of the imaging module corresponding to the light spot region (LA), which detects light of the specific color.

5. The image processing device according to claim 2,
wherein the imaging unit (13) is a stereo camera,
the image processing device further comprising a distance information acquisition unit (14) that acquires distance information on the basis of a plurality of images captured by the imaging unit (13),
wherein the specific color detection unit (12) is further configured to also allow for detection of a light spot (LS) of the specific color from a distant region (FA) set on the basis of the distance information.

6. The image processing device according to claim 5, wherein, when light spot (LS) is not detected by the light spot detection unit (11), the specific color detection unit (12) detects the light spot (LS) of the specific color from the distant region (FA) set in the second image (G2).

7. A light distribution control system that controls light distribution of a headlight of a vehicle,
the light distribution control system comprising: the image processing device according to any one of claims 1 to 7; and a control signal generation unit (20) that generates a light distribution control signal for the headlight on the basis of detection results of the light spot detection unit (11) and the specific color detection unit (12).

8. The light distribution control system according to claim 7, further comprising a light distribution control unit (30) that controls light distribution of the headlight between a high beam and a low beam on the basis of the light distribution control signal.

## Patentansprüche

1. Bildverarbeitungsvorrichtung zum Steuern einer Lichtverteilung eines Scheinwerferlichts eines Fahrzeugs, die Folgendes umfasst:
eine Lichtfleckdetektionseinheit (11), die konfiguriert ist, einen Lichtfleck (LS) aus einem ersten Bild (G1) zu detektieren, wobei jeder Lichtfleck (LS) ein Rücklicht oder ein Scheinwerferlicht eines anderen Fahrzeugs ist; und
eine Einheit zur Detektion einer spezifischen Farbe (12), die konfiguriert ist,
um für jeden Lichtfleck (LS), der durch die Lichtfleckdetektionseinheit (11) detektiert wird, nur einen Lichtfleckbereich (LA) in einem zweiten Bild (G2) abzutasten, wobei das zweite Bild (G2) einen höheren Belichtungsbetrag als das erste Bild (G1) besitzt und wobei der Lichtfleckbereich (LA) in dem zweiten Bild (G2) derart eingestellt ist, dass er dem Lichtfleck (HS) entspricht, der in dem ersten Bild (G1) detektiert wird, und
um eine spezifische Farbe in dem Lichtfleckbereich (LA) in dem zweiten Bild (G2) zu detektieren, der dem Lichtfleck (LS) von dem ersten Bild (G1) entspricht,
wobei der höhere Belichtungsbetrag des zweiten Bilds (G2) derart eingestellt ist, dass die spezifische Farbe in dem Lichtfleckbereich (LA) in dem zweiten Bild (G2) detektiert werden kann.

2. Bildverarbeitungsvorrichtung nach Anspruch 1, die ferner Folgendes umfasst:
eine Bildgebungseinheit (13), die das erste Bild (G1) und das zweite Bild (G2) aufnimmt,
wobei die Bildgebungseinheit (13) mehrere Bildgebungsmodule enthält und jedes Bildgebungsmodul mehrere Lichtempfangselemente enthält, die Licht mehrerer Farben, einschließlich der spezifischen Farbe, detektieren.

3. Bildverarbeitungsvorrichtung nach Anspruch 2, wobei die Lichtfleckdetektionseinheit (11) den Lichtfleck (LS) anhand einer Helligkeit detektiert, die aus der Signalstärke des Bildgebungsmoduls ausgearbeitet wird.

4. Bildverarbeitungsvorrichtung nach Anspruch 2, wobei die Einheit zur Detektion einer spezifischen Farbe (12) die spezifische Farbe anhand einer Signalstärke des Lichtempfangselements des Bildgebungsmoduls, das dem Lichtfleckbereich (LA) entspricht, der das Licht der spezifischen Farbe detektiert, detektiert.

5. Bildverarbeitungsvorrichtung nach Anspruch 2,
wobei die Bildgebungseinheit (13) eine Stereokamera ist,
wobei die Bildverarbeitungsvorrichtung ferner eine Abstandsinformationserfassungseinheit (14) umfasst, die Abstandsinformationen anhand mehrerer Bilder, die durch die Bildgebungseinheit (13) aufgenommen werden, erfasst,
wobei die Einheit zur Detektion einer spezifischen Farbe (12) ferner konfiguriert ist, außerdem eine Detektion eines Lichtflecks (LS) der spezifischen Farbe von einem entfernten Bereich (FA), der anhand der Abstandsinformationen eingestellt ist, zu erlauben.

6. Bildverarbeitungsvorrichtung nach Anspruch 5, wobei dann, wenn ein Lichtfleck (LS) nicht durch die Lichtfleckdetektionseinheit (11) detektiert wird, die Einheit zur Detektion einer spezifischen Farbe (12) den Lichtfleck (LS) der spezifischen Farbe von dem entfernten Bereich (FA), der in dem zweiten Bild (G2) eingestellt ist, detektiert.

7. Lichtverteilungssteuersystem, das eine Lichtverteilung eines Scheinwerferlichts eines Fahrzeugs steuert,
wobei das Lichtverteilungssteuersystem Folgendes umfasst: die Bildverarbeitungsvorrichtung nach einem der Ansprüche 1 bis 7; und eine Steuersignalerzeugungseinheit (20), die ein Lichtverteilungssteuersignal für das Scheinwerferlicht anhand der Detektionsergebnisse der Lichtfleckdetektionseinheit (11) und der Einheit zur Detektion einer spezifischen Farbe (12) erzeugt.

8. Lichtverteilungssteuersystem nach Anspruch 7, das ferner eine Lichtverteilungssteuereinheit (30) umfasst, die eine Lichtverteilung des Scheinwerferlichts zwischen einem Fernlichtstrahl und einem Abblendlichtstrahl anhand des Lichtverteilungssteuersignals steuert.

## Revendications

1. Dispositif de traitement d'image destiné à commander une distribution de lumière d'un phare avant d'un véhicule, comprenant :
une unité de détection de point lumineux (11) configurée pour détecter un point lumineux (LS) provenant d'une première image (G1), dans lequel chaque point de lumière (LS) est un feu arrière ou un phare avant d'un autre véhicule ; et
une unité de détection de couleur spécifique (12) configurée pour :
balayer, pour chaque point lumineux (LS) détecté par ladite unité de détection de point lumineux (11), uniquement une région du point lumineux (LA) dans une seconde image (G2), dans lequel ladite seconde image (G2) a une quantité d'exposition à la lumière supérieure à celle de la première image (G1), et dans lequel ladite région du point lumineux (LA) est définie dans la seconde image (G2) de manière à correspondre au point lumineux (LS) détecté dans la première image (G1), et
détecter une couleur spécifique dans la région du point lumineux (LA), dans la seconde image (G2), correspondant au point lumineux (LS) provenant de la première image (G1),
dans lequel la quantité d'exposition à la lumière supérieure de la seconde image (G2) est définie de sorte que la couleur spécifique peut être détectée dans la région du point lumineux (LA) dans la seconde image (G2).

2. Dispositif de traitement d'image selon la revendication 1, comprenant en outre :
une unité d'imagerie (13) qui capture la première image (G1) et la seconde image (G2),
dans lequel l'unité d'imagerie (13) inclut une pluralité de modules d'imagerie, et chaque module d'imagerie inclut une pluralité d'éléments de réception de lumière qui détectent une lumière d'une pluralité de couleurs incluant la couleur spécifique.

3. Dispositif de traitement d'image selon la revendication 2, dans lequel l'unité de détection de point lumineux (11) détecte le point lumineux (LS) sur la base de la luminance mise au point à partir de l'intensité de signal du module d'imagerie.

4. Dispositif de traitement d'image selon la revendication 2, dans lequel l'unité de détection de couleur spécifique (12) détecte la couleur spécifique sur la base de l'intensité du signal de l'élément de réception de lumière du module d'imagerie correspondant à la région du point lumineux (LA), qui détecte une lumière de la couleur spécifique.

5. Dispositif de traitement d'image selon la revendication 2,
dans lequel l'unité d'imagerie (13) est une caméra stéréoscopique,
le dispositif de traitement d'image comprenant en outre une unité d'acquisition d'information de distance (14) qui acquiert une information de distance sur la base d'une pluralité d'images capturées par l'unité d'imagerie (13),
dans lequel l'unité de détection de couleur spécifique (12) est en outre configurée pour également permettre une détection d'un point lumineux (LS) de la couleur spécifique provenant d'une région distante (FA) définie sur la base de l'information de distance.

6. Dispositif de traitement d'image selon la revendication 5, dans lequel, quand un point lumineux (LS) n'est pas détecté par l'unité de détection de point lumineux (11), l'unité de détection de couleur spécifique (12) détecte le point lumineux (LS) de la couleur spécifique provenant de la région distante (FA) définie dans la seconde image (G2).

7. Système de commande de distribution de lumière qui commande une distribution de lumière d'un phare avant d'un véhicule,
le système de commande de distribution de lumière comprenant : le dispositif de traitement d'image selon l'une quelconque des revendications 1 à 7 ; et une unité de génération de signal de commande (20) qui génère un signal de commande de distribution de lumière pour le phare avant sur la base de résultats de détection de l'unité de détection de point lumineux (11) et de l'unité de détection de couleur spécifique (12).

8. Système de commande de distribution de lumière selon la revendication 7, comprenant en outre une unité de commande de distribution de lumière (30) qui commande une distribution de lumière du phare avant entre un faisceau élevé et un faisceau bas sur la base du signal de commande de distribution de lumière.
